# EUROPEAN PATENT APPLICATION

(11) **EP 4 465 512 A1**
(43) Date of publication of application: **20.11.2024**
(21) Application number: 24175850.7
(22) Date of filing: 14.05.2024
(51) Int. Cl.: H02M 1/00, H02M 7/162, H02M 7/17, H02M 7/19

(54) **HIGH-POWER RECTIFICATION ARRANGEMENT FOR AN ELECTROLYSER SYSTEM**

(30) Priority: 16.05.2023 US 202318197802
(71) Applicant: Air Products and Chemicals, Inc., Allentown, PA 18106-5500 (US)
(72) Inventor: Fekriasl, Sajjad, Stafford, ST17 0AA (GB); Hashiesh, Fahd, Wynnewood 19096 (US)
(74) Representative: Beck Greener LLP

(57) **Abstract**

There is provided an electrolyser power system comprising: a transformer arrangement having: at least one primary winding connectable to an AC power source; and a plurality of secondary windings; a first rectifier arrangement comprising: an AC input connected to a first secondary winding of the transformer arrangement; and a first DC output; a second rectifier arrangement comprising: an AC input connected to a second secondary winding of the transformer arrangement; and a second DC output; and a plurality of discrete electrically coupled electrolyser modules, wherein each electrolyser module is electrically connected between the first and second DC outputs.

## Description

The present invention relates to an improved apparatus for high-power rectification. More particularly, the present invention relates to a rectification configuration for an electrolyser system resulting in improved power quality and component lifetime.

There is considerable interest in the industrial production of hydrogen using electrolysis of water or steam, amongst others. Water or steam electrolysis is operable to produce hydrogen having high purity levels. In addition, electrolysis is more environmentally friendly than other methods, particularly if the electrolysis process is powered by renewable power sources. Generally, three conventional types of electrolyser are utilized to produce hydrogen - alkaline water electrolysers (AWE); polymer electrolyte membrane (PEM) electrolysers; and solid oxide electrolysers (SOE).

These electrolysers all require DC supply voltages. Therefore, AC/DC converters are required when power is supplied from an AC source (which may comprise a power grid or renewable sources).

Two main types of AC/DC converter are commonly used: diode rectifiers and thyristor-based rectifiers with harmonic filtering. A thyristor is a solid-state semiconductor device comprising four layers of alternating p- and n-type semiconductor materials which define three p-n junctions in series. A thyristor is a uni-directional device which will conduct current in a single direction only.

Thyristor-based rectifiers are more commonly used for industrial applications where high currents are required to supply electrolysers because they provide greater current control. However, diode-based systems have advantages in terms of reduced complexity. For example, thyristor-based rectifiers require active control whereas diode-based rectifiers do not.

Thyristor rectifiers and diode rectifiers are often used in a bridge formation to act as AC/DC rectifiers (for example a Graetz bridge). For three-phase AC to DC applications a formation known as a 6-pulse thyristor rectifier bridge may be used. Such configurations are able to handle large current loads, and this makes then suitable for use in applications such as high-power electrolysers where low operating voltages can lead to high current loads.

However, known rectifier bridges suffer from a number of drawbacks. For example, power quality concerns can arise where both total harmonic distortion (THD) filtering and power factor compensations at the AC side will be inevitably required to be in compliance with the operation requirements and power grid codes.

In addition, due to nature of switching systems at high currents, the form of DC current provided to the electrolyser is often oscillatory. Therefore, this current will itself often require additional DC-side filtering. However, this poses severe technical and safety challenges due to the high currents.

Chattering DC currents include high frequency spectra that can have an adverse effect on hydrogen generation in that they lower the time-averaged power available to the electrolysers, reducing their potential output. In addition, such disturbed currents can have an adverse effect on the lifetime of electrolysers.

Therefore, there exists a technical problem that it is difficult to provide smooth DC currents using known arrangements of thyristor or diode rectifiers. The present invention, in embodiments, aims to address these issues.

The following introduces a selection of concepts in a simplified form in order to provide a foundational understanding of some aspects of the present disclosure. The following is not an extensive overview of the disclosure and is not intended to identify key or critical elements of the disclosure or to delineate the scope of the disclosure. The following merely summarizes some of the concepts of the disclosure as a prelude to the more detailed description provided thereafter.

Several preferred aspects of the methods and systems according to the present invention are outlined below.

Aspect 1: An electrolyser power system comprising: a transformer arrangement having: at least one primary winding connectable to an AC power source; and a plurality of secondary windings; a first rectifier arrangement comprising: an AC input connected to a first secondary winding of the transformer arrangement; and a first DC output; a second rectifier arrangement comprising: an AC input connected to a second secondary winding of the transformer arrangement; and a second DC output; and a plurality of discrete electrically-coupled electrolyser modules, wherein each electrolyser module is electrically connected between the first and second DC outputs.

Aspect 2: An electrolyser power system according to Aspect 1, wherein the electrolyser modules are connected in series between the first and second DC outputs.

Aspect 3: An electrolyser power system according to Aspect 1, wherein the electrolyser modules are connected in parallel between the first and second DC outputs.

Aspect 4: An electrolyser power system according to Aspect 1, 2 or 3, wherein each electrolyser module comprises a plurality of electrolyser cells.

Aspect 5: An electrolyser power system according to Aspect 1, 2, 3 or 4, wherein at least two of the plurality of electrolyser modules have different operational characteristics resulting from ageing effects.

Aspect 6: An electrolyser power system according to any one of Aspects 1 to 5, wherein the first rectifier arrangement comprises a thyristor rectifier circuit.

Aspect 7: An electrolyser power system according to Aspect 6, wherein the second rectifier arrangement comprises a thyristor rectifier circuit or a diode rectifier circuit.

Aspect 8: An electrolyser power system according to any one of Aspects 1 to 7, wherein the first rectifier arrangement and the second rectifier arrangement are connected in series.

Aspect 9: An electrolyser power system according to any one of Aspects 1 to 7, wherein the first rectifier arrangement and the second rectifier arrangement are connected in parallel.

Aspect 10: An electrolyser power system according to any one of Aspects 1 to 9, wherein the AC power source comprises a three-phase AC power source.

Aspect 11. An electrolyser power system according to Aspect 10, wherein the first rectifier arrangement comprises a six-pulse thyristor rectifier bridge topology.

Aspect 12: An electrolyser power system according to Aspect 11, wherein the second rectifier arrangement comprises a six-pulse thyristor rectifier bridge or a six-pulse diode rectifier bridge topology.

Aspect 13. An electrolyser power system according to Aspect 11 or 12, wherein the first and second rectifier arrangements are connected in series.

Aspect 14: An electrolyser power system according to Aspect 11 or 12, wherein the first and second rectifier arrangements are connected in parallel.

Aspect 15: An electrolyser power system according to any one of Aspects 1 to 14, wherein the transformer arrangement comprises a single transformer having a single primary winding and a plurality of secondary windings.

Aspect 16: An electrolyser power system according to any one of Aspects 1 to 14, wherein the transformer arrangement comprises a plurality of discrete transformer units each having a single primary winding and a single secondary winding.

Aspect 17. An electrolyser power system according to any one of Aspects 1 to 16, further comprising: a third rectifier arrangement comprising: an AC input connected to a third secondary winding of the transformer arrangement; and a third DC output; a fourth rectifier arrangement comprising: an AC input connected to a fourth secondary winding of the transformer arrangement; and a fourth DC output; and a second plurality of discrete electrically-coupled electrolyser modules each electrically connected between the third and fourth DC outputs.

Aspect 18: An electrolyser power system according to Aspect 17, wherein the second plurality of electrolyser modules are connected in series or in parallel between the third and fourth DC outputs.

Aspect 19. An electrolyser power system according to Aspect 17, wherein the third rectifier arrangement comprises a thyristor rectifier circuit and the fourth rectifier arrangement comprises a thyristor rectifier circuit or a diode rectifier circuit.

Aspect 20. An electrolyser power system according to any one of Aspects 1 to 19, wherein each electrolyser module is configured to produce hydrogen from water or steam.

Aspect 20A: An electrolyser power system according to any one of Aspects 17 to 20, wherein the first rectifier arrangement and the second rectifier arrangement are connected in series.

Aspect 20B: An electrolyser power system according to any one of Aspects 17 to 20, wherein the first rectifier arrangement and the second rectifier arrangement are connected in parallel.

Aspect 20C. An electrolyser power system according to any one of Aspects 1 to 20, further comprising an autotransformer connectable to an AC power source and arranged upstream of the transformer arrangement.

Embodiments of the present invention will now be described by example only and with reference to the figures in which:
FIGURE 1 is a schematic diagram of an electrolyser system;
FIGURE 2a is a schematic diagram of six-pulse thyristor rectifier bridge;
FIGURE 2b is an equivalent AC circuit to Figure 2a;
FIGURE 2c is a schematic diagram of six-pulse diode rectifier bridge;
FIGURE 2d is an equivalent AC circuit to Figure 2a;
FIGURE 3 is a schematic circuit diagram of a power element configuration comprising the six-pulse thyristor bridge of Figures 2a and 2b;
FIGURE 4 is a graph showing the relative difference between simulated instantaneous and time-averaged electrolyser powers for the electrolysers shown in the configuration of Figure 3, where the electrolysers have different operational ages;
FIGURE 5 is a graph showing relative difference between simulated currents for the electrolysers shown in the configuration of Figure 3;
FIGURE 6a is a schematic circuit diagram of a power element configuration according to an embodiment of the present invention;
FIGURES 6b and 6c show series and parallel versions of the circuit of Figure 6a;
FIGURES 6d and 6e show equivalent AC circuits to Figures 6b and 6c showing the components of the thyristor bridges, respectively;
FIGURE 7 is a graph showing the relative difference between simulated instantaneous and time-averaged electrolyser powers for the electrolysers shown in the configuration of Figures 6a, 6b and 6d;
FIGURE 8 is a graph is a graph showing the relative difference between simulated currents for the electrolysers shown in the configuration of Figures 6a, 6b and 6d;
FIGURE 9a is a schematic circuit diagram of a power element configuration according to another embodiment of the present invention;
FIGURES 9b and 9c show series and parallel versions of the circuit of Figure 9a;
FIGURES 9d and 9e show equivalent AC circuits to Figures 9b and 9c showing the components of the thyristor bridges;
FIGURE 10a is a schematic circuit diagram of a power element configuration according to another embodiment of the present invention; and
FIGURE 10b is an equivalent AC circuit to Figure 10a showing the components of the thyristor bridges;
FIGURES 11a to 11f show further embodiments using diode front ends; and
FIGURES 12a and 12b show further embodiments using four secondary windings and four electrolysers.

Embodiments of the present disclosure and their advantages are best understood by referring to the detailed description that follows. It should be appreciated that like reference numbers are used to identify like elements illustrated in one or more of the figures, wherein showings therein are for purposes of illustrating embodiments of the present disclosure and not for purposes of limiting the same.

Various examples and embodiments of the present disclosure will now be described. The following description provides specific details for a thorough understanding and enabling description of these examples. One of ordinary skill in the relevant art will understand, however, that one or more embodiments described herein may be practiced without many of these details. Likewise, one skilled in the relevant art will also understand that one or more embodiments of the present disclosure can include other features and/or functions not described in detail herein. Additionally, some well-known structures or functions may not be shown or described in detail below, so as to avoid unnecessarily obscuring the relevant description.

In embodiments, rectification arrangements such as thyristor bridges and diode bridges are used for two or more electrolyser modules placed in series or parallel with two rectifiers in a double six-pulse operation.

In embodiments, it has been found that such combinations provide more stable DC currents with lower THD, reduced degradation rates, and reduced power sharing sensitivity between two differently aged electrolysers when electrically coupled together. Improved harmonic spectra at the AC side are another advantage - this will result in smaller harmonic filtering requirements and consequently smaller filtering footprints.

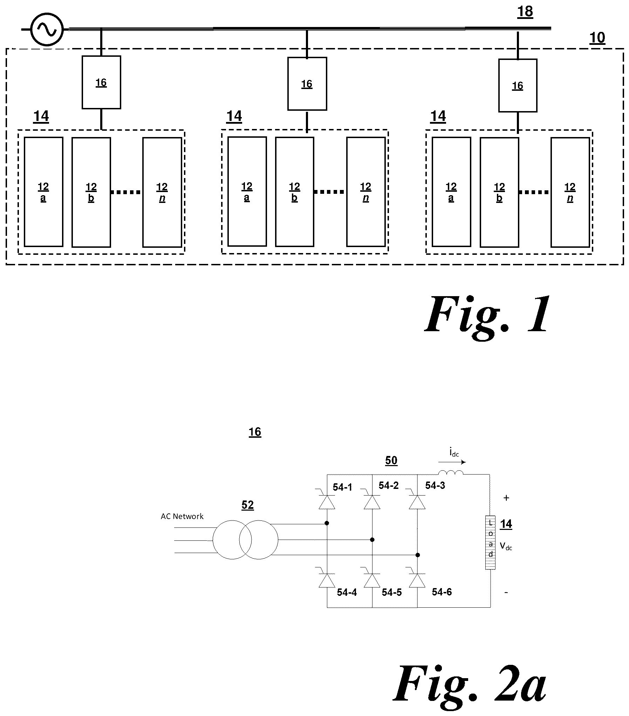

Embodiments of the invention and examples relating to the invention will now be described with reference to Figures 1 to 12.

### ELECTROLYSER DESCRIPTION

Figure 1 shows an exemplary electrolyser system 10 for production of hydrogen. The electrolyser system 10 is configured to electrolyse water or steam to form hydrogen and oxygen. Any suitable source of water or steam may be used. However, in embodiments in which sea water is used to produce the water for the electrolysis, the apparatus may further comprise at least one desalination and demineralisation plant to for processing the sea water.

The electrolyser system 10 comprises a plurality of electrolysis units or cells 12a, 12b ... 12n. In embodiments, the plurality of electrolysis units or cells 12a, 12b, 12n are combined or stacked into electrolyser modules 14 that may also include process equipment such as pumps, coolers, and/or separators. In embodiments, an electrolyser module 14 may have of the order of 300 stack cells 12a, 12b, 12n. In embodiments, the electrolyser modules 14 each comprise a stack of cells 12a, 12b, 12n which may form a discrete and separate module.

In embodiments, each electrolyser module 14 comprises electrically separate downstream power supply modules 16 connected to an AC power supply 18. In embodiments, the AC power supply may comprise power produced at least in part from renewable energy sources.

Each electrolyser module 14 may comprise a plurality of stack cells 12a, 12, 12n which combine to produce a maximum capacity greater than 5 MW, although this is not intended to be limiting. In embodiments, the total capacity of each electrolyser module 14 may be of the order of 5 to 50 MW or higher if required.

Any suitable type of electrolyser may be used with the present invention in order to produce hydrogen. Generally, three conventional types of electrolyser are utilised - alkaline electrolysers; PEM electrolysers; and solid oxide electrolysers. Any of these types may be used with the present invention.

Alkaline electrolysers transport hydroxide ions (OH⁻) through the electrolyte from the cathode to the anode with hydrogen being generated on the cathode side. Commonly, a liquid alkaline solution of sodium hydroxide or potassium hydroxide is used as the electrolyte.

A PEM electrolyser utilizes a solid plastics material as an electrolyte, and water reacts at an anode to form oxygen and positively charged hydrogen ions. The electrons flow through an external circuit and the hydrogen ions selectively move across the PEM to the cathode. At the cathode, hydrogen ions combine with electrons from the external circuit to form hydrogen gas.

Solid oxide electrolysers use a solid ceramic material as the electrolyte that selectively conducts negatively charged oxygen ions (O²⁻) at elevated temperatures. Water at the cathode combines with electrons from the external circuit to form hydrogen gas and negatively charged oxygen ions. The oxygen ions pass through the solid ceramic membrane and react at the anode to form oxygen gas and generate electrons for the external circuit.

Electrolysers are known to change or degrade in performance and/or efficiency with operational use. In use, a new electrolyser which is initialised is defined as being at its start of life (SOL) or start of running (SOR). An electrolyser module at the end of its life is defined as being at its end of running (EOR). EOR is defined as a specific level of performance or efficiency degradation such that repair or replacement is necessary.

Between these two extremes, an electrolyser module will degrade during use, resulting in different performance, efficiency and power consumption characteristics over time and when compared to another electrolyser module. This can be challenging to manage in conventional arrangements.

However, in embodiments of the present invention, electrolyser modules at SOR, EOR, or combination of electrolyser modules having different ageing (for example, one at SOR, another one halfway to EOR) can be used in combination, in contrast to known arrangements. Practically speaking, two electrolyser modules may never be identical in age due to differing operating conditions, harmonic distortion, load over time and failure in electrolyser stack cells forming part of the electrolyser modules. In embodiments, the present invention addresses these issues.

Ageing of electrolyser modules may be determined in numerous ways. For example, a timer may indicate how long an electrolyser module has been in operation. In addition, ageing can be identified from the current-voltage characteristics of the electrolyser module where the resistance of the electrolyser module increases over time due to degradation and wear of components.

Further, individual electrolyser cells 12a, 12b, 12n within an electrolyser module 14 may fail in use, necessitating replacement. Thus, an electrolyser module 14 may comprise a number of electrolyser cells 12a, 12b, 12n having different operational ages. This may potentially create unique ageing characteristics for each electrolyser module 14.

In summary, an electrolyser module 14 may have particular and unique operational characteristics resulting from ageing effects in use. In embodiments, two or more electrolyser modules 14 may have different operational characteristics resulting from ageing effects in use.

The downstream power modules 16 will now be described.

### RECTIFIER TRANSFORMER

In embodiments, the downstream power modules 16 each comprise a rectifier transformer. A rectifier transformer may, in embodiments, comprise a single structural unit comprising both the necessary rectification and down-conversion electronic elements to convert the incoming high voltage (typically 10's of kVs) AC power supply to high-current DC supply for the connected electrolyser module 14.

In embodiments, a downstream power module 16 comprises a 6-pulse thyristor rectifier 50. This is known as an Active Front End (AFE).

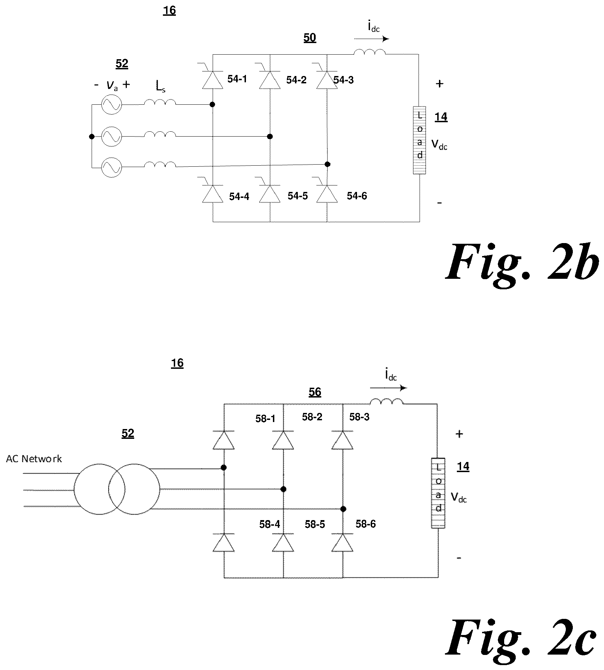

Figure 2a shows a schematic diagram of 6-pulse thyristor rectifier 50 for an electrolyser module 14. Figure 2b shows the diagram of Figure 2a but with an equivalent AC circuit. As shown, the thyristor rectifier 50 is connected to the three-phase AC power source 18 via a rectifier transformer 52.

The thyristor rectifier 50 comprises 6 thyristors 54-1 to 54-6 connected in three parallel rows (one for each phase of the AC input power source 18) in a full wave Graetz bridge topology.

All thyristors 54-1 to 54-6 are controlled by appropriate gate trigger signals which defines the firing angle α of the thyristors 54-1 to 54-6. The firing angle α represents the point in the AC cycle at which the thyristor switches on and conducts. For rectification purposes, α must be between 0 and π/2. Thyristors are controllable in this manner such that the output DC voltage can be controlled.

The thyristor rectifier 50 is connected to an electrolyser module 14 such that the rectified DC voltage V_{DC} is across the electrolyser module 14.

Alternatively, in embodiments, a downstream power module 16 comprises a 6-pulse diode rectifier 56. This is known as a Diode Front End (DFE).

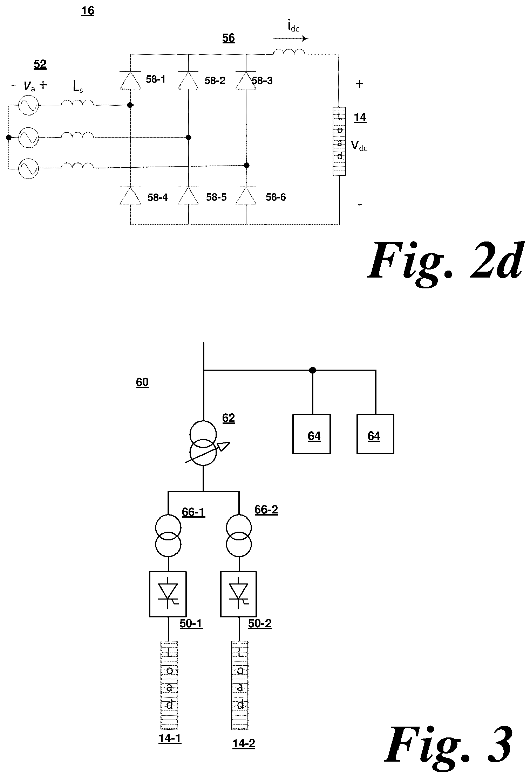

Figure 2c shows a schematic diagram of 6-pulse diode rectifier 56 for an electrolyser module 14. Figure 2d shows the diagram of Figure 2c but with an equivalent AC circuit. As shown, the diode rectifier 56 is connected to the three-phase AC power source 18 via the rectifier transformer 52.

The diode rectifier 56 comprises 6 diodes 58-1 to 58-6 connected in three parallel rows (one for each phase of the AC input power source 18) in a full wave Graetz bridge topology. In contrast to the thyristor rectifier of Figures 2a and 2b, the diode rectifier 56 is uncontrolled. This may result in lower current control capability. However, diode rectifiers are cheaper and simpler than equivalent thyristor rectifiers and may find useful application in various scenarios.

The diode rectifier 56 is connected to the electrolyser module 14 such that the rectified DC voltage V_{DC} is across the electrolyser module 14.

### POWER ELEMENT CONFIGURATION EXAMPLE

Figure 2 shows an example of a configuration 60 of power elements for a pair of electrolyser modules 14.

The configuration 60 has a regulator in the form of an autotransformer 62 on the input AC power line. An autotransformer has only a single coil winding. The AC power is provided on the primary side to the coil winding through two input terminals, and one or more secondary terminals at tap points are provided on the secondary side.

The secondary terminals, at least one of which is usually common with one primary terminal, enables voltage control in the manner of a regulator. More than one output can be connected to the secondary terminals. In this case, the outputs of the secondary terminals are electrically connected through mutual inductance.

THD and VAR filters 64 are provided in parallel with the AC power line to smooth harmonic distortion on the AC side.

The autotransformer 62 is operable to supply two electrolyser modules 14-1, 14-2. Downstream of the autotransformer 62, on each power line branch is located a rectifier transformer 66-1, 66-2. In embodiments, each rectifier transformer 66-1, 66-2 comprises a single primary coil and a single secondary coil for each phase of the 3-phase AC input.

A six-pulse thyristor rectifier 50-1, 50-2 is provided in each branch upstream of the respective electrolyser module 14-1, 14-2. The thyristor rectifiers 50-1, 50-2 are substantially similar to those described in the embodiment of Figures 2a and 2b.

In this embodiment, the electrolyser modules 14-1, 14-2 are coupled only via mutual induction at the secondary terminals of the autotransformer 62. In other respects the two branches are electrically and inductively isolated. In particular, there is no electrical connection or inductive coupling on the DC side of the power elements.

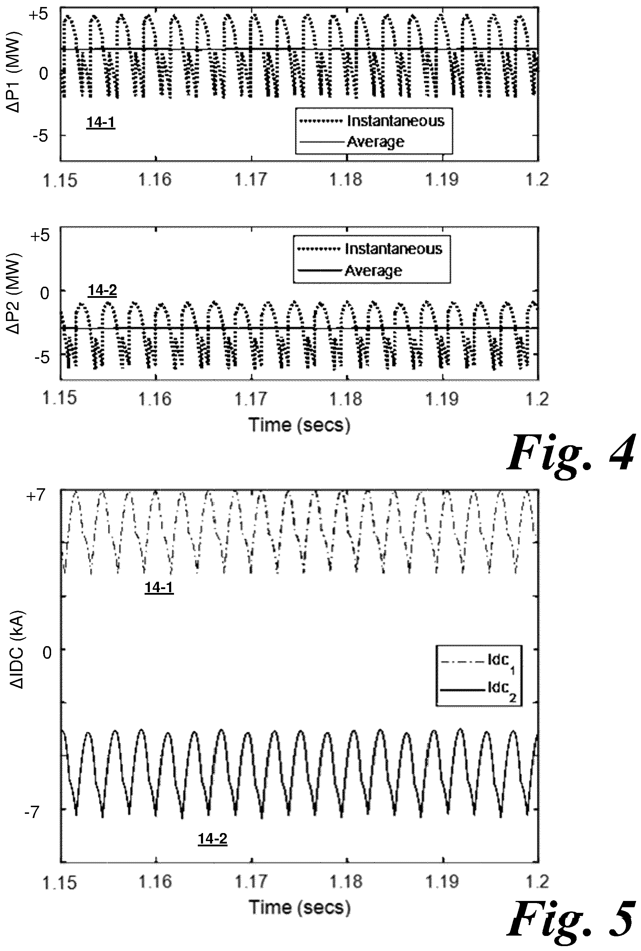

Figures 4 and 5 demonstrate a sample simulation using the 12-pulse thyristor rectification (two separate 6-pulses) of Figure 3. In this simulation, a new (beginning-of-life) electrolyser module 14-1 is included on one path and an aged (end-of-life) electrolyser module 14-2 on the other path. Both rectifiers 50-1, 50-2 have identical firing angles of π/9 or 20°.

For clarity, Figure 4 shows the difference (i.e. the delta offset) between the simulated measured powers for each electrolyser 14-1, 14-2. As shown in Figure 4, the new electrolyser module 14-1 shows significant chattering (variable ΔP1) having a peak to trough variation of 7 MW. In embodiments, this may be a significant percentage of the total average power.

The aged electrolyser module 14-2 is chattering (variable P2) with a peak to trough variation of around 5 MW. Further, the delta offset between power feeds for each electrolyser module 14-1, 14-2 is approximately 5 MW in a configuration of two separate 6-pulse rectifiers having equal firing angles to produce actual 12-pulse balanced operational waveforms.

Figure 5 shows the difference (i.e. delta offset) between the DC currents for the same two electrolyser modules 14-1, 14-2 of Figure 3. IDC₁ and IDC₂ correspond to the delta offset between the DC currents through electrolyser module 14-1 and electrolyser module 14-2 respectively. As shown, the difference in the currents is large, with IDC₁ and IDC₂ having a peak to trough variation of approximately 3.5 kA and a difference between the peak of IDC₁ and the trough of IDC₂ of 14 kA.

Therefore, as shown, the currents IDC₁, IDC₂ of both electrolyser modules 14-1, 14-2 in this situation suffer from significant chatter with high DC total harmonic distortion (THD). Such currents have high frequency spectrum results of which will be higher drop in DC voltage at the thyristor rectifiers 50-1, 50-2.

The DC current ripple (derived from the RMS of the current signal) is of the order of 4%. This is highly undesirable. Ripple current can result in increased dissipation in resistive portions of the electrolyser modules 14-1, 14-2. This dissipation is proportional to I²R. This will consequently reduce the efficiency of green hydrogen generation. In addition, such ripple can lead to power oscillations at the grid connection. This can cause additional problems (such as exceeding power limits) when connecting to renewable power sources.

Embodiments of the present invention aim to address these issues.

### EMBODIMENTS OF INVENTION

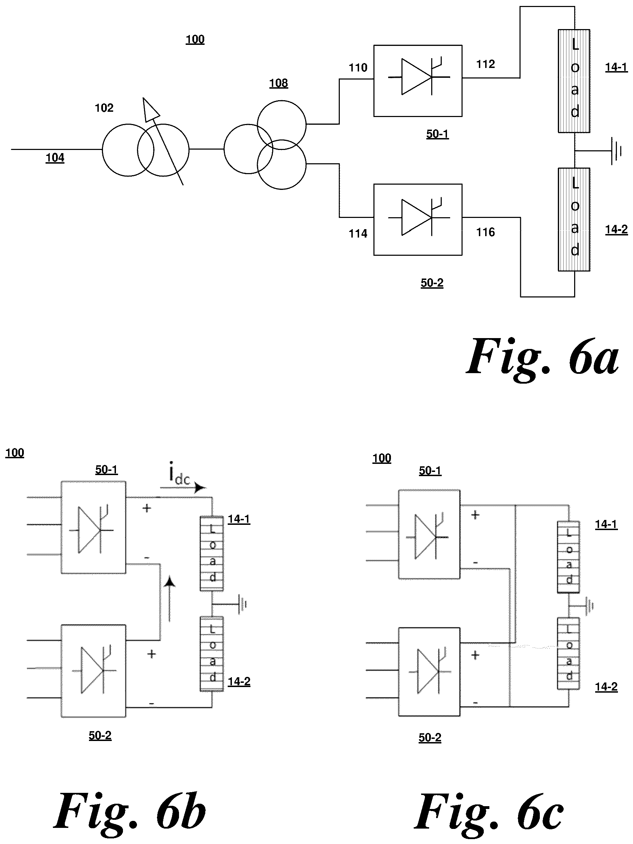

Figure 6a shows a schematic diagram of a power element configuration 100 according to embodiments of the invention.

The power element configuration 100 comprises a regulator in the form of an autotransformer 102 on the input AC power line 104. The autotransformer 102 has a single coil winding. The AC power is provided on the primary side to the coil winding through two input terminals, and one or more secondary terminals at tap points are provided on the secondary side.

The secondary terminals, at least one of which is usually common with one primary terminal, enables voltage control in the manner of a regulator. More than one output can be connected to the secondary terminals. In this case, the outputs of the secondary terminals are electrically connected through mutual inductance.

THD and VAR filters (not shown) are provided in parallel with the AC power line to smooth harmonic distortion on the AC side of the electronic circuit.

In this embodiment, the autotransformer 102 is operable to supply two electrolyser modules 14-1, 14-2. A rectifier transformer 108 is located downstream of the autotransformer 102. In this embodiment, the rectifier transformer 108 has a single primary winding and two secondary windings.

In embodiments, the secondary windings may be arranged to produce a phase difference therebetween. This may involve structures such as, for example, a first secondary winding having a three-phase star (or "Y") configuration and a second secondary winding having a three-phase delta (or triangular) configuration. This produces a natural π/6 shift between the two generated secondary voltages.

However, this is not to be taken as limiting and other configurations of rectifier transformer may be used with the present invention. For example, other configurations of first and second secondary windings could be used to produce different phase shifts between the two generated voltages. Examples of such configurations may include zigzag, extended Y or extended Y-delta configurations.

Alternatively or additionally, two rectifier transformers 108 may be used with a single secondary winding each. In this example, each rectifier transformer 108 may be located on a different power line branch downstream of the autotransformer 102, and each rectifier transformer 108 may have a different configuration to achieve a desired phase shift between the two generated voltages.

A six-pulse thyristor rectifier 50-1, 50-2 is provided in each branch downstream of the rectifier transformer 108 and upstream of the respective electrolyser module 14-1, 14-2. The thyristor rectifiers 50-1, 50-2 are substantially similar to those described in the embodiment of Figures 2a and 2b.

Thyristor rectifier 50-1 has an AC input 110 (which, in embodiments, may comprise a three-phase AC input having three AC input terminals as shown in later figures) connected to the first secondary winding and a DC output 112. The DC output 112 may comprise an output terminal. Thyristor rectifier 50-2 has an AC input 114 (which, in embodiments, may comprise a three-phase AC input having three AC input terminals as shown in later figures) connected to the second secondary winding and a DC output 116. The DC output 116 may comprise an output terminal. Electrolyser modules 14-1, 14-2 are electrically coupled and electrically connected in series between the DC outputs 112, 116 as will be described below.

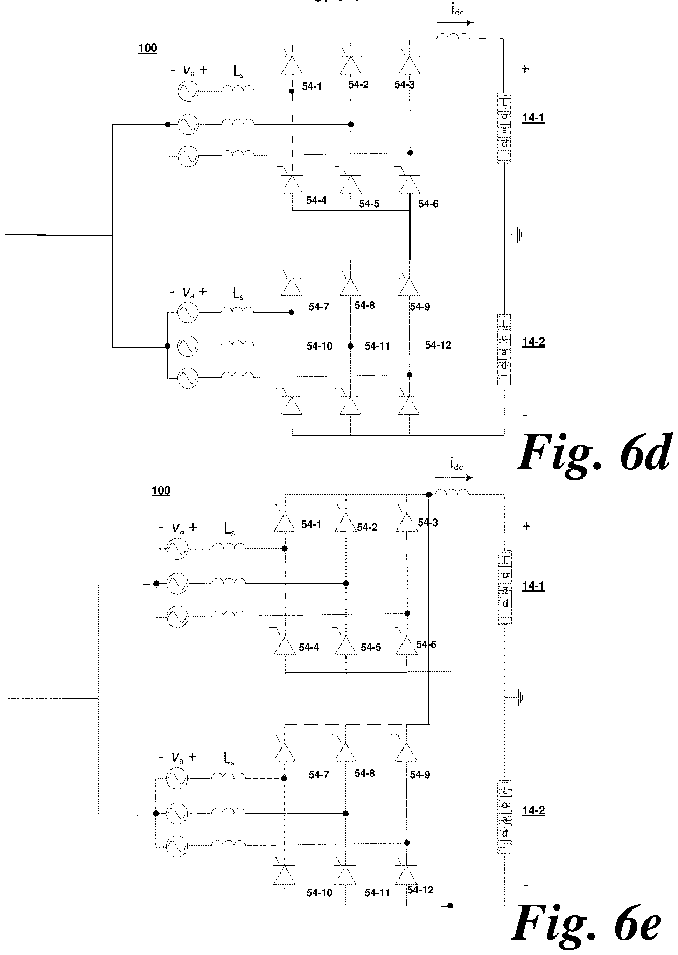

Two possible configurations of the thyristor rectifiers are shown in the embodiments of Figures 6b and 6d, and Figures 6c and 6e, respectively. Figures 6b and 6c show schematic diagrams of the general configurations of these circuits, and Figures 6d and 6e show the equivalent AC circuits and illustrate the bridge structures in detail.

In the embodiment of Figures 6b and 6d, the thyristor rectifiers 50-1, 50-2 are connected together in series. In the embodiment of Figures 6c and 6e, the thyristor rectifiers 50-1, 50-2 are connected together in parallel.

Considering the embodiment shown in Figures 6b and 6d, rectifier 50-1 comprises thyristors 54-1 to 54-6 and rectifier 50-2 comprises thyristors 54-7 to 54-12. These two bridge circuit structures are connected together in series as shown in detail in Figure 6d.

Turning to the embodiment shown in Figures 6c and 6e, rectifier 50-1 comprises thyristors 54-1 to 54-6 and rectifier 50-2 comprises thyristors 54-7 to 54-12. These two bridge circuit topologies are connected together in parallel as shown in detail in Figures 6e.

Both embodiments fall within the scope of the present invention. The selection of series or parallel connections for the rectifiers 50-1, 50-2 will depend upon the requirements of the electrolyser 14-1, 14-2 configuration.

One such factor that may determine the specific configuration is the size of the electrolysers 14-1, 14-2. As an example, low-voltage high-power (high-current) electrolysers are subjected to large surface area (of one electrode), hence these designs demand high DC currents, and comprise a limited number of cells. This results in a lower DC voltage stack within each electrolyser module 14-1, 14-2.

For such a configuration, electrolysers 14-1, 14-2 can be placed in series, and rectifiers 50-1, 50-2 can be placed in series. The rate of each rectifier (both voltage and current) will be at the same rate of electrolyser at End of Running (EOR) or End of Life (EOL).

In another example, if electrolysers 14-1, 14-2 are relatively small but the rectifiers 50-1, 50-2 are designed for higher power rates, the electrolysers 14-1, 14-2 can, as described in later embodiments, be placed in parallel. Finally, other configurations are also possible.

As shown in each of Figures 6a to 6e, in contrast to the example of Figure 3, electrolyser modules 14-1 and 14-2 are electrically coupled together in series. In embodiments, the system is grounded between the electrolyser modules 14-1, 14-2. The ground may be a direct ground or it may be a virtual ground through balancing or selection of components.

In embodiments, electrolyser modules 14-1 and 14-2 may have a capacity of the order of 20 MW each, and a combined total of the order of 40 MW. As discussed and shown below, the coupling of a plurality of electrolyser modules in this manner has significant benefits over the arrangement shown in Figure 3 and over known arrangements.

As shown most clearly in Figure 6a, the two electrolyser modules 14-1, 14-2 are electrically coupled on both the AC and the DC side. The modules 14-1, 14-2 are coupled via mutual induction at the autotransformer 102 secondary terminals, and at the DC side by the series connection between electrolyser modules 14-1, 14-2.

In the circuits shown in Figure 6a to 6e, a phase shift of π/6 (30°) is generated between the voltages on thyristor rectifier 50-1 and on thyristor rectifier 50-2. In the following comparative simulation, the same phase shift was used. However, this need not be the case and other phase shifts, and dissimilar phase shifts between rectifiers, could be used as appropriate.

In the exemplary embodiments, a 30° phase shift should, with series coupling between the electrolyser modules 14-1, 14-2, lead to smoothing of the DC signals. As a result, the DC currents for both electrolyser modules 14-1, 14-2 are expected to have reduced chattering and have lower DC current and voltage THD.

In addition, such currents have low-power high frequency spectra, which should result in a lower drop in DC voltage at the thyristor rectifiers 50-1, 50-2, and consequently improve the efficiency of green hydrogen generation. In addition, such a setup will not create any considerable oscillatory power at the grid connection when connecting to renewable generation units.

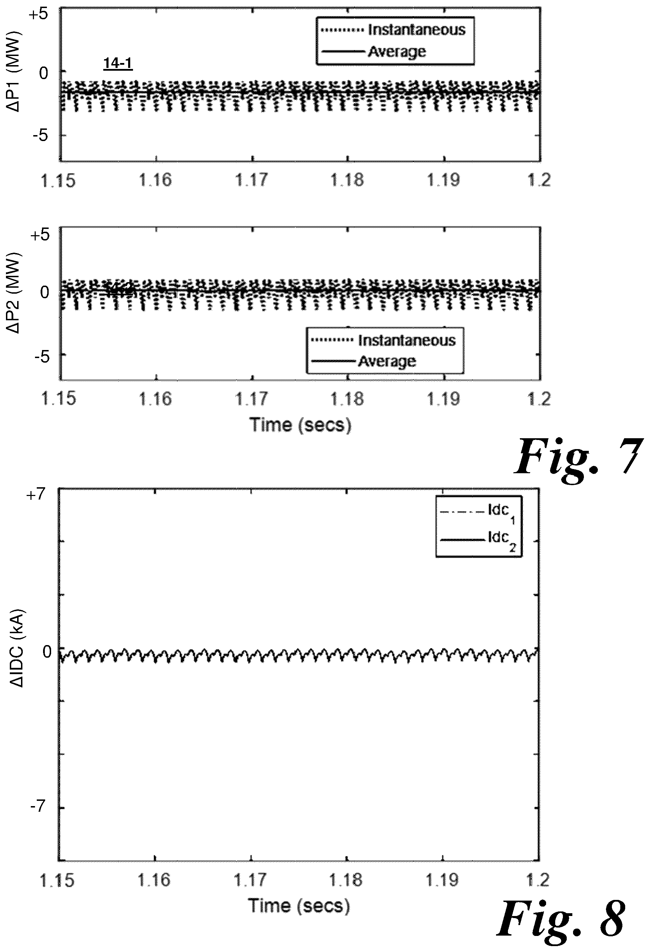

Figures 7 and 8 demonstrate a sample simulation on the results of 12-pulse thyristor rectification (two separate 6-pulses) of Figure 6a, 6b and 6d. In this simulation, the same new (beginning-of-life) electrolyser module 14-1 used in the simulation of Figures 4 and 5 is paired with the same aged (end-of-life) electrolyser module 14-2 (again, with the same parameters as the previous example of Figures 4 and 5).

However, the electrolyser modules 14-1, 14-2 are electrically coupled as per the Figure 6 embodiment. To benefit fully from the two six-pulse with phase shifting (to reduce THD as much as possible), both rectifiers 50-1, 50-2 are again fired at identical firing angles of π/9 or 20°.

As shown in Figure 7, the power value for the new electrolyser 14-1 (variable ΔP1) is now chattering with a peak to trough variation of only about 2 MW. This is a significant reduction in peak to trough chattering when compared to the simulation of Figures 4 and 5.

The aged electrolyser module 14-2 again is chattering with a peak to trough variation of about 2 MW (variable ΔP2). In addition, there is only a ~1 MW difference in the delta offset between the power feeds for each electrolyser module 14-1, 14-2 in a configuration of two separate 6-pulse rectifiers having equal firing angles to produce actual 12-pulse balanced operational waveforms when the electrolyser modules are electrically coupled as shown in Figures 6a, 6b and 6d.

Figure 8 shows the DC currents for the two electrolyser modules 14-1, 14-2 of Figure 7. IDC₁ and IDC₂ correspond to the delta offset between the DC currents through electrolyser module 14-1 and electrolyser module 14-2 respectively. In contrast to the example of Figure 5, the currents IDC₁ (of electrolyser module 14-1) and IDC₂ (of electrolyser module 14-2) are identical with no delta offset and with only a small ripple current in each case.

The DC current ripple (derived from the RMS of the current signal) for this configuration is of the order of 0.65%, almost an order of magnitude lower than for the example of Figures 4 and 5 (4% vs 0.65%). Given the ripple current can result in increased dissipation in resistive portions of the electrolyser modules 14-1, 14-2 in proportion to I²R, this is a significant improvement over the arrangement of Figure 3 and the subject of the simulation in Figures 4 and 5.

This improvement in performance has, in embodiments, significant benefits in terms of lifetime of the electrolyser modules 14-1, 14-2 and efficiency of hydrogen generation. As demonstrated his configuration has a number of benefits for operation of large electrolyser modules with rectifier bridges, whilst the size and of harmonic filtering can be significantly reduced.

### FURTHER EMBODIMENTS OF INVENTION

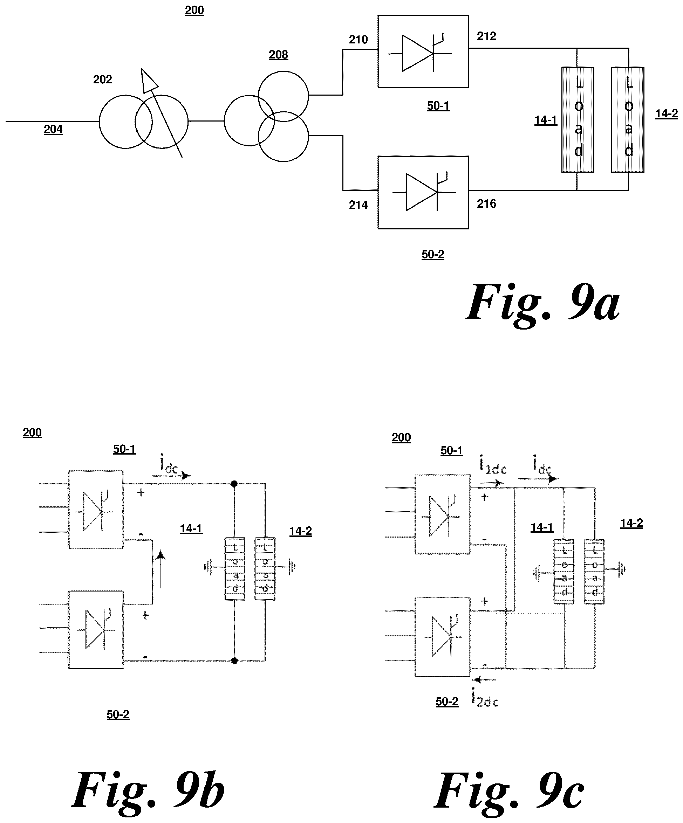

Figures 9a to 9e show further embodiments of a power element configuration 200 according to the present invention. The power element configuration 200 comprises a regulator in the form of an autotransformer 202 on the input AC power line 204. The autotransformer 202 corresponds to the autotransformer 102 of the previous embodiment and has a single coil winding. The AC power is provided on the primary side to the coil winding through two input terminals, and one or more secondary terminals at tap points are provided on the secondary side.

The secondary terminals, at least one of which is usually common with one primary terminal, enables voltage control in the manner of a regulator. More than one output can be connected to the secondary terminals. In this case, the outputs of the secondary terminals are electrically connected through mutual inductance.

THD and VAR filters (not shown) are provided in parallel with the AC power line to smooth harmonic distortion on the AC side of the electronic circuit.

In this embodiment, the autotransformer 202 is operable to supply two electrolyser modules 14-1, 14-2. A rectifier transformer 208 is located downstream of the autotransformer 202. In this embodiment, and in common with the embodiment of Figures 6a and 6b, the rectifier transformer 208 has a single primary winding and two secondary windings.

In embodiments, the secondary windings may be arranged to produce a phase difference therebetween. This may involve structures such as, for example, a first secondary winding having a three-phase star (or "Y") configuration and a second secondary winding having a three-phase delta (or triangular) configuration. This produces a natural π/6 shift between the two generated secondary voltages.

However, this is not to be taken as limiting and other configurations of rectifier transformer may be used with the present invention. For example, other configurations of first and second secondary windings could be used to produce different phase shifts between the two generated voltages. Examples of such configurations may include zigzag, extended Y or extended Y-delta configurations.

Alternatively or additionally, two rectifier transformers 208 may be used with a single secondary winding each. In this example, each rectifier transformer 208 may be located on a different power line branch downstream of the autotransformer 202, and each rectifier transformer 208 may have a different configuration to achieve a desired phase shift between the two generated voltages.

A six-pulse thyristor rectifier 50-1, 50-2 is provided in each branch downstream of the rectifier transformer 208 and upstream of the respective electrolyser module 14-1, 14-2. The thyristor rectifiers 50-1, 50-2 are substantially similar to those described in the embodiment of Figure 2.

Thyristor rectifier 50-1 has an AC input 210 (which, in embodiments, may comprise a three-phase AC input having three AC input terminals as shown in later figures) connected to the first secondary winding and a DC output 212. The DC output 212 may comprise an output terminal. Thyristor rectifier 50-2 has an AC input 214 (which, in embodiments, may comprise a three-phase AC input having three AC input terminals as shown in later figures) connected to the second secondary winding and a DC output 216. The DC output 216 may comprise an output terminal. Electrolyser modules 14-1, 14-2 are electrically coupled and electrically connected in parallel between the DC outputs 212, 216 as will be described below.

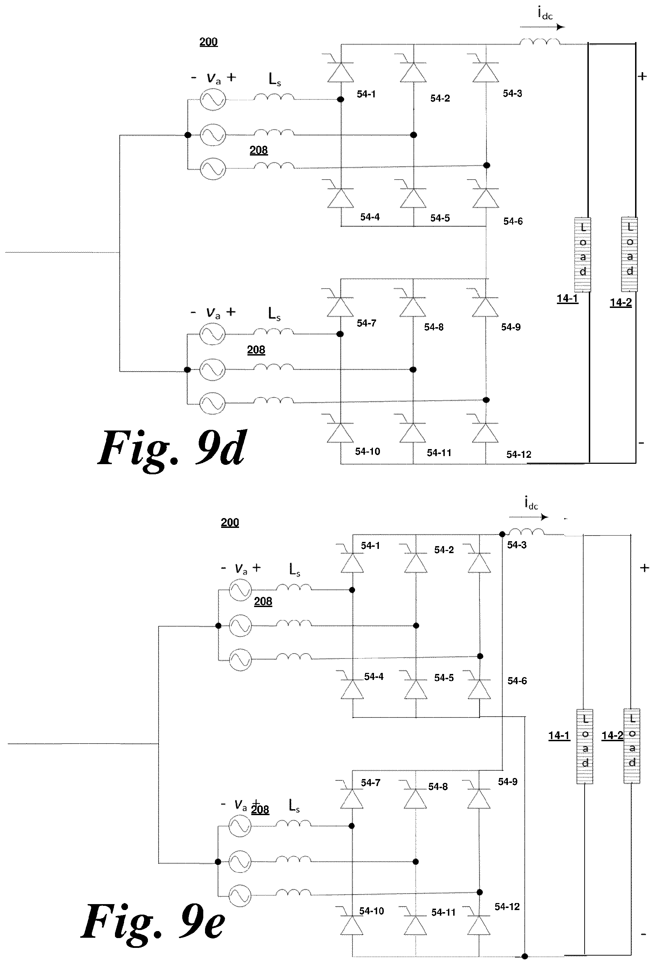

Two possible configurations of the thyristor rectifiers are shown in the embodiments of Figures 9b and 9c, and Figures 9d and 9e, respectively. Figures 9b and 9c show schematic diagrams of the general configurations of these circuits, and Figures 9d and 9e show the equivalent AC circuits and illustrate the bridge structures in detail.

In the embodiment of Figures 9b and 9d, the thyristor rectifiers 50-1, 50-2 are connected together in series. In the embodiment of Figures 9c and 9e, the thyristor rectifiers 50-1, 50-2 are connected together in parallel.

Considering the embodiment shown in Figures 9b and 9d, rectifier 50-1 comprises thyristors 54-1 to 54-6 and rectifier 50-2 comprises thyristors 54-7 to 54-12. These two bridge circuit structures are connected together in series as shown in detail in Figure 9d.

Turning to the embodiment shown in Figures 9c and 9e, rectifier 50-1 comprises thyristors 54-1 to 54-6 and rectifier 50-2 comprises thyristors 54-7 to 54-12. These two bridge circuit structures are connected together in parallel as shown in detail in Figure 9e.

Both embodiments fall within the scope of the present invention. The selection of series or parallel connections for the rectifiers will depend upon the requirements of the electrolyser configuration.

Both embodiments fall within the scope of the present invention. The selection of series or parallel connections for the rectifiers will depend upon the requirements of the electrolyser configuration.

One such factor that may determine the specific configuration is the size of the electrolysers. As an example, low-voltage high-power (high-current) electrolysers are subjected to large surface area (of one electrode), hence demand high DC currents, and a limited number of cells. This results in a lower DC voltage stack.

For such a configuration, electrolysers can be placed in series, and rectifiers can be placed in series. The rate of each rectifier (both voltage and current) will be at the same rate of electrolyser at End of Running (EOR) or End of Life (EOL).

In another example, if electrolysers are small but rectifiers are designed at higher power rates, the electrolysers can be placed in parallel. Other configurations are also possible.

As shown in Figures 9a to 9e, in contrast to the embodiments of Figures 6a to 6e, electrolyser modules 14-1 and 14-2 are electrically coupled together in parallel. The system is grounded between the electrolyser modules 14-1, 14-2. In embodiments, electrolyser modules 14-1 and 14-2 may have a capacity of the order of 20 MW each, and a combined total of the order of 40 MW. As discussed and shown below, the coupling of a plurality of electrolyser modules in parallel has significant benefits over the arrangement shown in Figure 3 and over known arrangements.

As shown in Figure 9a, the two electrolyser modules 14-1, 14-2 are coupled in on both the AC and the DC side. The modules 14-1, 14-2 are coupled via mutual induction at the autotransformer 102 secondary terminals, and at the DC side by the parallel connection between electrolyser modules 14-1, 14-2.

In the circuit shown in Figures 9a to 9e, a phase shift of π/6 (30°) is generated between the voltages on thyristor rectifier 50-1 and on thyristor rectifier 50-2. Such a phase shift should, with the parallel coupling between the electrolyser modules 14-1, 14-2, lead to smoothing of the DC signals. As a result, the DC currents for both electrolyser modules 14-1, 14-2 are expected to have reduced chattering and have lower DC current and voltage THD.

In addition, such currents have low-power high frequency spectra, which should result in a lower drop in DC voltage at the thyristor rectifiers 50-1, 50-2, and consequently improve the efficiency of green hydrogen generation. In addition, such a setup will not create any considerable oscillatory power at the grid connection when connecting to renewable generation units.

Connection of electrolyser modules 14-1, 14-2 in parallel is most suitable when connecting two electrolyser modules having similar dynamics.

### FURTHER EMBODIMENTS OF INVENTION

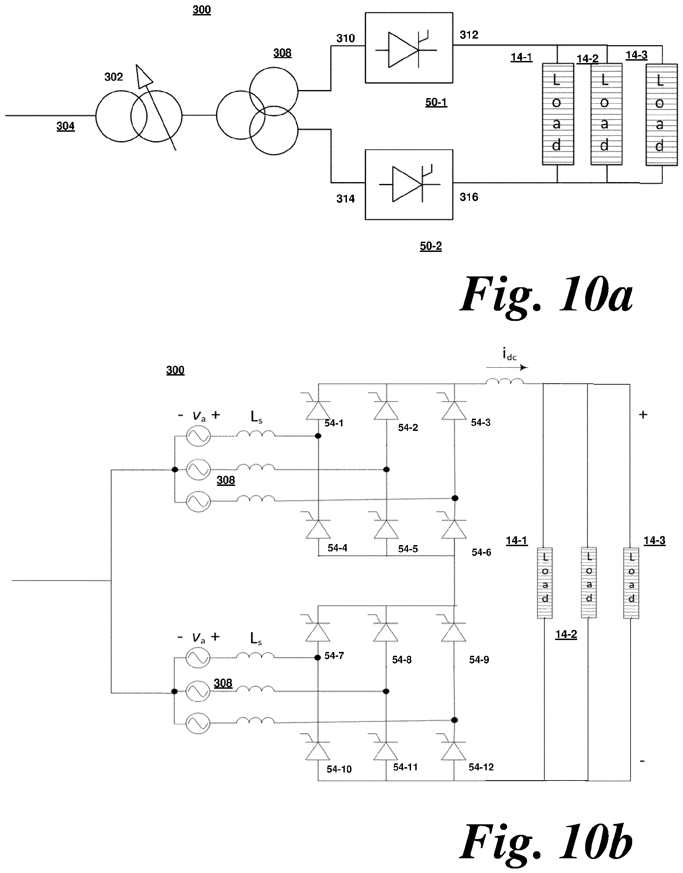

Figures 10a and 10b show a further embodiment of a power element configuration 300 according to the present invention. The features of embodiment 300 correspond to those of embodiment 200 and will not be described further.

For example, thyristor rectifier 50-1 has an AC input 310 connected to the first secondary winding and a DC output 312. Thyristor rectifier 50-2 has an AC input 314 (which, in embodiments, may comprise a three-phase AC input having three AC input lines as shown in later figures) connected to the second secondary winding and a DC output 316. Electrolyser modules 14-1, 14-2, 14-3 are electrically coupled and electrically connected in parallel between the DC outputs 312, 316 as will be described below.

Embodiment 300 differs from embodiment 200 in that three electrolyser modules 14-1, 14-2 and 14-3 are coupled in parallel. Connection of electrolyser modules 14-1, 14-2, 14-3 in parallel is most suitable when connecting two electrolyser modules having similar dynamics. In embodiments, any suitable number of electrolyser modules 14 may be connected in series or parallel as required. The only limiting factor is the available power.

Although not shown, this configuration of three or more electrolysers is also applicable to configurations having parallel connections between thyristor rectifiers as shown and described with reference to Figures 9c and 9e.

### FURTHER EMBODIMENTS OF INVENTION

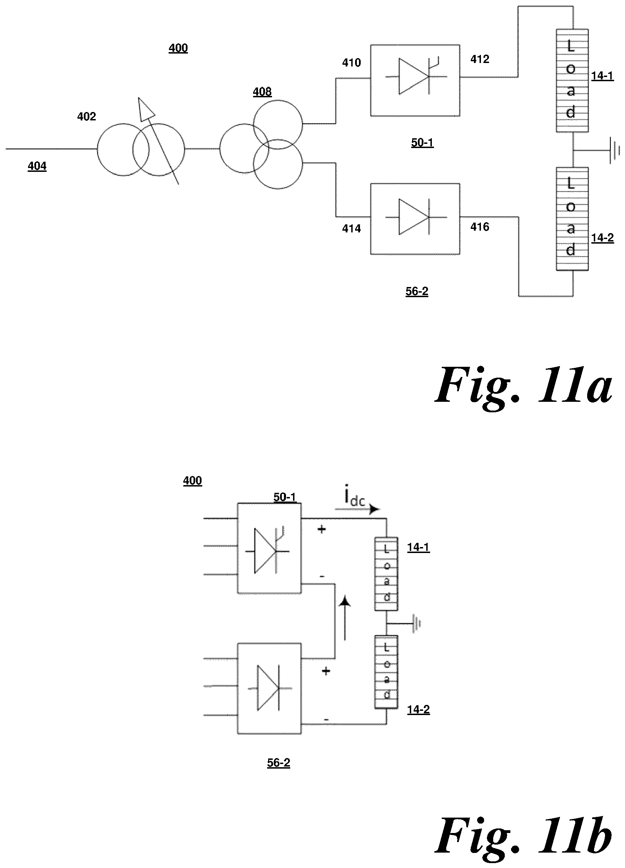

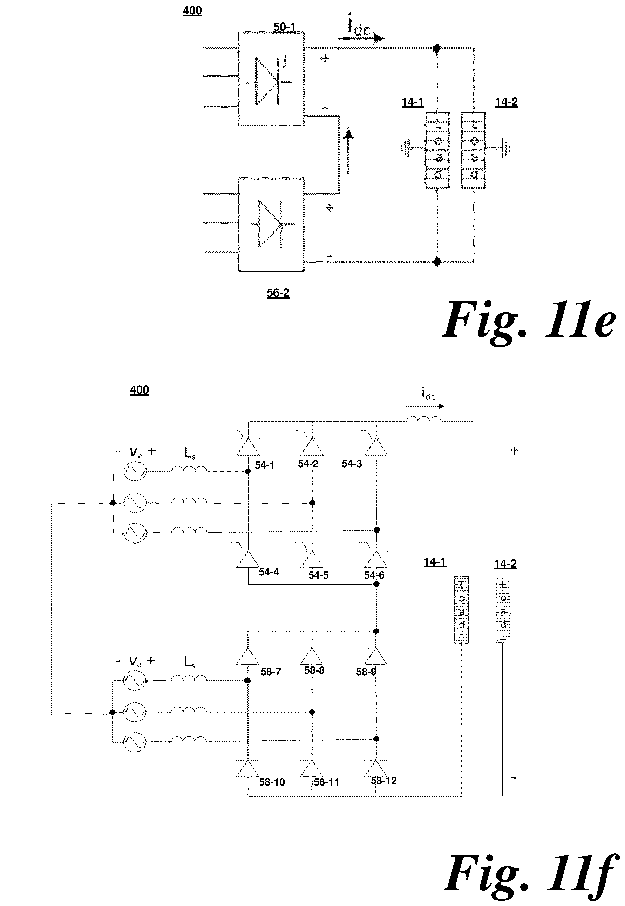

Figures 11a to 11c show a further embodiment of a power element configuration 400 according to the present invention. The power element configuration 400 comprises a regulator in the form of an autotransformer 402 on the input AC power line 404. The autotransformer 402 corresponds to the autotransformer 102 of the previous embodiment and has a single coil winding. The AC power is provided on the primary side to the coil winding through two input terminals, and one or more secondary terminals at tap points are provided on the secondary side.

The secondary terminals, at least one of which is usually common with one primary terminal, enables voltage control in the manner of a regulator. More than one output can be connected to the secondary terminals. In this case, the outputs of the secondary terminals are electrically connected through mutual inductance.

THD and VAR filters (not shown) are provided in parallel with the AC power line to smooth harmonic distortion on the AC side of the electronic circuit.

In this embodiment, the autotransformer 402 is operable to supply two electrolyser modules 14-1, 14-2. A rectifier transformer 408 is located downstream of the autotransformer 402. In this embodiment, and in common with the embodiment of Figures 6, 9 and 10, the rectifier transformer 408 has a single primary winding and two secondary windings.

In embodiments, the secondary windings may be arranged to produce a phase difference therebetween. This may involve structures such as, for example, a first secondary winding having a three-phase star (or "Y") configuration and a second secondary winding having a three-phase delta (or triangular) configuration. This produces a natural π/6 shift between the two generated secondary voltages.

However, this is not to be taken as limiting and other configurations of rectifier transformer may be used with the present invention. For example, other configurations of first and second secondary windings could be used to produce different phase shifts between the two generated voltages. Examples of such configurations may include zigzag, extended Y or extended Y-delta configurations.

Alternatively or additionally, two rectifier transformers 408 may be used with a single secondary winding each. In this example, each rectifier transformer 408 may be located on a different power line branch downstream of the autotransformer 402, and each rectifier transformer 408 may have a different configuration to achieve a desired phase shift between the two generated voltages.

A six-pulse thyristor rectifier 50-1 is provided in one branch downstream of the rectifier transformer 408 and upstream of the respective electrolyser module 14-1, 14-2. The thyristor rectifier 50-1 is substantially similar to those described in the embodiment of Figures 2a and 2b. Thyristor rectifier 50-1 has an AC input 410 (which, in embodiments, may comprise a three-phase AC input having three AC input terminals as shown in later figures) connected to the first secondary winding and a DC output 412. The DC output 412 may comprise an output terminal.

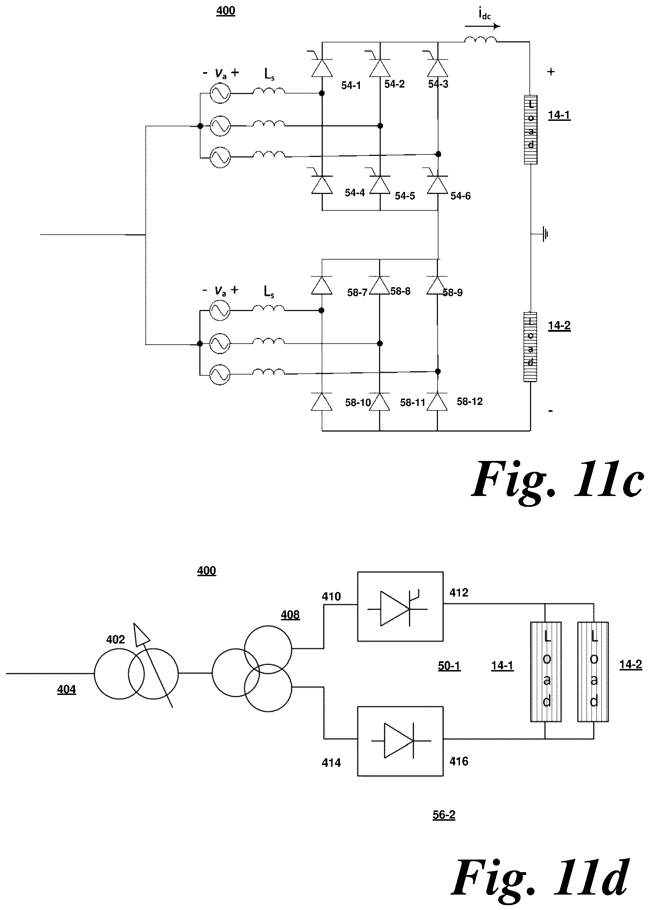

However, in this embodiment, the AFE of the second branch shown in Figures 6 and 9 is replaced by a DFE 56-2 as shown and described in Figures 2c and 2d. The DFE 56 has diodes 58-7 to 58-12 as shown in Figure 11c.

DFE rectifier 56-2 has an AC input 414 (which, in embodiments, may comprise a three-phase AC input having three AC input terminals as shown in later figures) connected to the second secondary winding and a DC output 416. The DC output 416 may comprise an output terminal. Electrolyser modules 14-1, 14-2 are electrically coupled and electrically connected in series between the DC outputs 412, 416 as will be described below.

A parallel arrangement of electrolysers 14-1, 14-2 is also applicable to this configuration. This is shown in the embodiment of Figures 11d to 11f. The same reference numerals are used for the same features in this embodiment as in the embodiment of Figures 11a to 11c.

Again, as for the embodiment of Figures 11a to 11c, a six-pulse thyristor rectifier 50-1 is provided in one branch downstream of the rectifier transformer 408 and upstream of the respective electrolyser module 14-1, 14-2. The thyristor rectifier 50-1 is substantially similar to those described in the embodiment of Figures 2a and 2b.

However, in this embodiment, the AFE of the second branch is replaced by a DFE 56-2 as shown and described in Figures 2c and 2d. The DFE 56 has diodes 58-7 to 58-12 as shown in Figure 11f.

Whilst not shown, the configuration shown in Figures 11d to 11f is also applicable to configurations having more than two electrolysers in parallel such as shown in, for example, the embodiment of Figures 10a and 10b.

### FURTHER EMBODIMENTS OF INVENTION

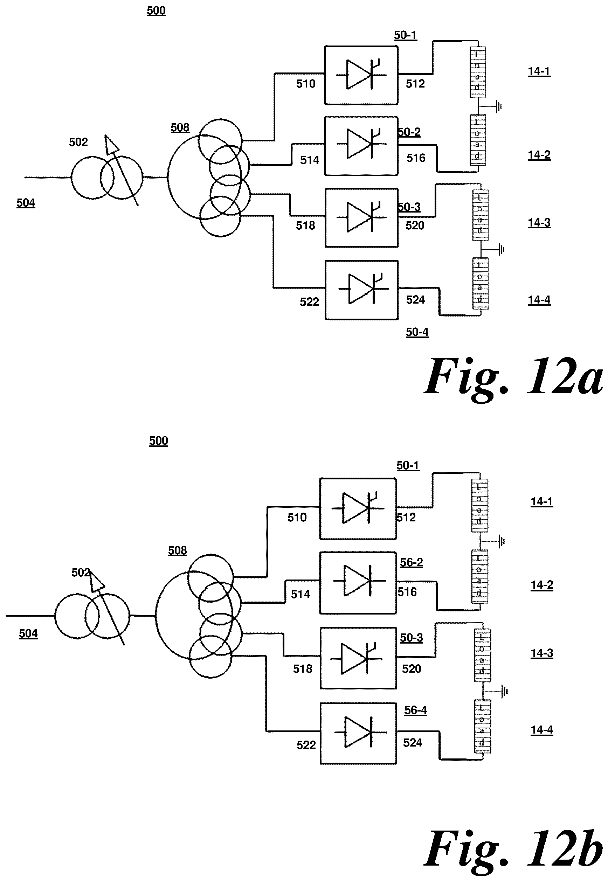

Figure 12a and 12b show further embodiments of a power element configuration 500 according to the present invention. The power element configuration 500 comprises a regulator in the form of an autotransformer 502 on the input AC power line 504. The autotransformer 502 corresponds to the autotransformer 102 of the previous embodiment and has a single coil winding. The AC power is provided on the primary side to the coil winding through two input terminals, and one or more secondary terminals at tap points are provided on the secondary side.

The secondary terminals, at least one of which is usually common with one primary terminal, enables voltage control in the manner of a regulator. More than one output can be connected to the secondary terminals. In this case, the outputs of the secondary terminals are electrically connected through mutual inductance.

THD and VAR filters (not shown) are provided in parallel with the AC power line to smooth harmonic distortion on the AC side of the electronic circuit.

In these embodiments, the autotransformer 502 is operable to supply four electrolyser modules 14-1, 14-2, 14-3, 14-4. A rectifier transformer 508 is located downstream of the autotransformer 502. In this embodiment, the rectifier transformer 508 has a single primary winding and four secondary windings.

In embodiments, the secondary windings may be arranged to produce a phase difference therebetween. This may involve structures such as, for example, a first secondary winding having a three-phase star (or "Y") configuration and a second secondary winding having a three-phase delta (or triangular) configuration. This produces a natural π/6 shift between any two generated secondary voltages.

However, this is not to be taken as limiting and other configurations of rectifier transformer may be used with the present invention. For example, other configurations of first, second, third and fourth secondary windings could be used to produce different phase shifts between the generated voltages. Examples of such configurations may include zigzag, extended Y or extended Y-delta configurations.

Alternatively or additionally, four rectifier transformers 508 may be used with a single secondary winding each. In this example, each rectifier transformer 508 may be located on a different power line branch downstream of the autotransformer 502, and each rectifier transformer 508 may have a different configuration to achieve a desired phase shift between the generated voltages.

In the embodiment of Figure 12a, four six-pulse thyristor rectifier 50-1, 50-2, 50-3, 50-4 is provided in each branch downstream of the rectifier transformer 508 and upstream of the respective electrolyser module 14-1, 14-2. The thyristor rectifiers 50-1, 50-2, 50-3, 50-4 are substantially similar to those described in the embodiment of Figure 2a and 2b.

Thyristor rectifier 50-1 has an AC input 510 (which, in embodiments, may comprise a three-phase AC input having three AC input terminals as shown in later figures) connected to the first secondary winding and a DC output 512. The DC output 512 may comprise an output terminal. Thyristor rectifier 50-2 has an AC input 514 (which, in embodiments, may comprise a three-phase AC input having three AC input terminals as shown in later figures) connected to the second secondary winding and a DC output 516. The DC output 516 may comprise an output terminal. Electrolyser modules 14-1, 14-2 are electrically coupled and electrically connected in series between the DC outputs 512, 516 as will be described below.

Further, thyristor rectifier 50-3 has an AC input 518 (which, in embodiments, may comprise a three-phase AC input having three AC input terminals as shown in later figures) connected to the first secondary winding and a DC output 520. The DC output 520 may comprise an output terminal. Thyristor rectifier 50-4 has an AC input 522 (which, in embodiments, may comprise a three-phase AC input having three AC input terminals as shown in later figures) connected to the second secondary winding and a DC output 524. The DC output 524 may comprise an output terminal. Electrolyser modules 14-1, 14-2 are electrically coupled and electrically connected in series between the DC outputs 520, 524 as will be described below.

Alternatively, in the embodiment of Figure 12b, one of rectifiers 50-1 and 50-2, and one of rectifiers 50-3, 50-4 is replaced by a DFE 56 as described above in relation to the embodiments of Figure 2c and 2d and Figures 11d to f.

In the example of Figure 12b, rectifiers 50-2 and 50-4 are replaced by diode rectifiers 56-2 and 56-4.

In addition, whilst the electrolysers 14-1, 14-2 and 14-3 and 14-4 are shown in series, this may not be the case and 14-1 and 14-2, or 14-3 and 14-4 may be provided in parallel.

In addition, further secondary windings may be provided as required and connected to additional rectifiers and electrolysers.

While the invention has been described with reference to the preferred embodiments depicted in the figures, it will be appreciated that various modifications are possible within the spirit or scope of the invention as defined in the following claims.

The above embodiments have been described and illustrated with respect to water or steam electrolysers for production of hydrogen. However, this is not to be taken as limiting and other suitable electrolyser systems may be used with the present invention as required, for production of hydrogen or other electrolysis products.

Further, due to a difference in the rectifier transformer voltage ratio (of the order ~1 to 100), there may be a small (of the order of µH) leakage reactance at the output rectifier transformer. This has the resulting effect of making the or each electrolyser a substantially resistive load (with a counter-emf, back-emf or reverse voltage). Hence, discontinuous DC currents and/or current distortions may occur. These issues may be addressed by introduction of a suitable inductor (choke) in series with the electrolysers which may be incorporated into any of the embodiments discussed above.

Whilst the grounding in the above embodiments is shown as direct earthing lines, this need not be the case. Whilst direct grounding is one possible alternative, the grounding may be achieved virtually through zero voltage points (for example, in balanced setup or operations). Therefore, where grounding is shown the skilled person would understand that this is indicating either zero voltage (ground voltage) in a balanced setup or operation, or actual physical grounding (e.g. solid grounding or via suitable resistances).

It will be understood that the term autotransformer as used herein may refer to a type of transformer that has a single winding with multiple taps, which allows for voltage regulation and adjustment in the electrolyser power system.

Whilst the above embodiments describe and illustrate specific configurations of thyristor rectifier, these are not to be taken as limiting. It will be understood that the term thyristor rectifier circuit as used herein may refer to a type of power electronic circuit that utilises thyristors as the main switching devices to convert alternating current to direct current.

Further, it will be understood that the term six-pulse thyristor rectifier bridge as used herein may refer to an electronic circuit configuration that utilizes six thyristor devices to convert three-phase alternating current power into direct current power.

Whilst the above embodiments describe and illustrate specific configurations of diode rectifier, these are not to be taken as limiting. It will be understood that the term diode rectifier circuit as used herein may refer to an electronic circuit that utilizes diodes to convert alternating current to direct current. It will be understood that the term six-pulse diode rectifier bridge as used herein may refer to an electrical circuit configuration consisting of six diodes arranged in a bridge topology.

In this specification, unless expressly otherwise indicated, the word "or" is used in the sense of an operator that returns a true value when either or both of the stated conditions are met, as opposed to the operator "exclusive or" which requires only that one of the conditions is met. The word "comprising" is used in the sense of "including" rather than to mean "consisting of".

All prior teachings above are hereby incorporated herein by reference. No acknowledgement of any prior published document herein should be taken to be an admission or representation that the teaching thereof was common general knowledge in Australia or elsewhere at the date thereof.

Where applicable, various embodiments provided by the present disclosure may be implemented using hardware. However, in specific scenarios, software, or combinations of hardware and software may be used, for example in control aspects.

Also, where applicable, the various hardware components and/or software components set forth herein may be combined into composite components comprising software, hardware, and/or both without departing from the spirit of the present disclosure. Where applicable, the various hardware components and/or software components set forth herein may be separated into sub-components comprising software, hardware, or both without departing from the scope of the present disclosure. In addition, where applicable, it is contemplated that software components may be implemented as hardware components and vice-versa.

Software, in accordance with the present disclosure, such as program code and/or data, may be stored on one or more computer readable mediums. It is also contemplated that software identified herein may be implemented using one or more general purpose or specific purpose computers and/or computer systems, networked and/or otherwise. Where applicable, the ordering of various steps described herein may be changed, combined into composite steps, and/or separated into sub-steps to provide features described herein.

While various operations have been described herein in terms of "modules", "units", "circuits", "configurations" or "components" it is noted that that terms are not limited to single units or functions. Moreover, functionality attributed to some of the "modules", "units", "circuits", "configurations" or "components" described herein may be combined and attributed to fewer "modules", "units", "circuits", "configurations" or "components".

Further still, while the present invention has been described with reference to specific examples, those examples are intended to be illustrative only, and are not intended to limit the invention. It will be apparent to those of ordinary skill in the art that changes, additions or deletions may be made to the disclosed embodiments without departing from the scope of the invention.

## Claims

1. An electrolyser power system comprising:
a transformer arrangement having:
at least one primary winding connectable to an AC power source; and
a plurality of secondary windings;
a first rectifier arrangement comprising:
an AC input connected to a first secondary winding of the transformer arrangement; and
a first DC output;
a second rectifier arrangement comprising:
an AC input connected to a second secondary winding of the transformer arrangement; and
a second DC output; and
a plurality of discrete electrically coupled electrolyser modules, wherein each electrolyser module is electrically connected between the first and second DC outputs.

2. An electrolyser power system according to claim 1, wherein the electrolyser modules are connected in series between the first and second DC outputs.

3. An electrolyser power system according to claim 1, wherein the electrolyser modules are connected in parallel between the first and second DC outputs.

4. An electrolyser power system according to any one of claims 1 to 3, wherein each electrolyser module comprises a plurality of electrolyser cells;
and/or
wherein at least two of the plurality of electrolyser modules have different operational characteristics resulting from ageing effects.

5. An electrolyser power system according to any one of the preceding claims, wherein the first rectifier arrangement comprises a thyristor rectifier circuit.

6. An electrolyser power system according to claim 5, wherein the second rectifier arrangement comprises a thyristor rectifier circuit or a diode rectifier circuit.

7. An electrolyser power system according to any one of the preceding claims, wherein the first rectifier arrangement and the second rectifier arrangement are connected in series.

8. An electrolyser power system according to any one of claims 1 to 7, wherein the first rectifier arrangement and the second rectifier arrangement are connected in parallel.

9. An electrolyser power system according to any one of the preceding claims, wherein the AC power source comprises a three-phase AC power source.

10. An electrolyser power system according to claim 9, wherein the first rectifier arrangement comprises a six-pulse thyristor rectifier bridge topology.

11. An electrolyser power system according to claim 10, wherein the second rectifier arrangement comprises a six-pulse thyristor rectifier bridge or a six-pulse diode rectifier bridge topology.

12. An electrolyser power system according to any one of the preceding claims, wherein the transformer arrangement comprises a single transformer having a single primary winding and a plurality of secondary windings; or
wherein the transformer arrangement comprises a plurality of discrete transformer units each having a single primary winding and a single secondary winding.

13. An electrolyser power system according to any one of the preceding claims, further comprising:
a third rectifier arrangement comprising:
an AC input connected to a third secondary winding of the transformer arrangement; and
a third DC output;
a fourth rectifier arrangement comprising:
an AC input connected to a fourth secondary winding of the transformer arrangement; and
a fourth DC output; and
a second plurality of discrete electrically coupled electrolyser modules each electrically connected between the third and fourth DC outputs.

14. An electrolyser power system according to claim 13, wherein the second plurality of electrolyser modules are connected in series or in parallel between the third and fourth DC outputs;
and/or
wherein the third rectifier arrangement comprises a thyristor rectifier circuit and the fourth rectifier arrangement comprises a thyristor rectifier circuit or a diode rectifier circuit.

15. An electrolyser power system according to any one of the preceding claims, wherein each electrolyser module is configured to produce hydrogen from water or steam.
